# EUROPEAN PATENT APPLICATION

(11) **EP 1 211 768 A2**
(43) Date of publication of application: **05.06.2002**
(21) Application number: 01308578.2
(22) Date of filing: 08.10.2001
(51) Int. Cl.: H02B 1/20

(54) **Totality of electrical apparatus mounted on a carrier, having a current distributing means.**

(30) Priority: 13.10.2000 BE 200000655
(71) Applicant: GE Power Controls Belgium, 9000 Gent (BE)
(72) Inventor: Decuyper, John, 9880 Maria-Aalter (BE)
(74) Representative: Pedder, James Cuthbert

(57) **Abstract**

The invention relates to a totality comprising a plurality of electric current interruptors (1), a rail (2) and a current distributing means (3) comprising a lengthwise electrically insulating housing (15, 16) provided with openings (23) and, for each phase, an electric conductor (17) placed in the housing (15, 16). The current interruptors (1) comprise a housing (6) containing, per phase, an electric contact element the portion of which projecting outside the housing (6) is formed by a lip (14) projecting outside of an edge (11) located between the back and the front of the apparatus (1) and through an opening (23) in the housing (15, 16) of the current distributing means (3) located along the edges (10, 11) of the housings (6) of the apparatus (1) mounted on the carrier (2).

## Description

This invention relates to a totality comprising a plurality of electrical apparatus, in particular current interruptors, a carrier on which the apparatus may be mounted, and a current distributing means for transferring current from one apparatus to one or more other apparatus mounted on the carrier, the current distributing means comprising an elongated electrically insulating housing provided with openings and, for at least one phase, an electric conductor placed in the housing, the apparatus comprising a housing and, per phase, an electrical contact element projecting outside of the housing and, after attachment of the apparatus to the carrier and placement of the current distributing means, penetrating an opening in the housing of the current distributing means and making conductive contact with the conductor therein.

Such a totality is described in EP A 0,886,353. The totality described therein is single-phase, which means that all current interruptors are single-terminal, and in the distributing means likewise, only one single conductor is present, in the form of a flat copper plate.

The single-pole current interruptors have a contact element one end of which projects through a hole in the housing of the current distributing means and which is fastened to the connection terminal with a screw, and which has a part that extends along the bottom edge of the housing to beyond the back there-of and to beyond the rail, and the end of which projects through an opening in the housing of the current distributing means to make contact with the conductor.

The current distributing means is thus located behind in relation to the rail.

This obstructs the passage between the rail and the rear wall of the box. Often wires or cables must be placed between the rail and the rear wall and through the rear wall, for example to apparatus on other rails.

The invention seeks to remedy this disadvantage, and to provide a totality of the type described in the first paragraph in which the space between the carrier or rail and the rear wall of the box or the like is obstructed as little as possible.

This is accomplished, according to the invention, in that the portion of a contact element projecting outside of the housing of the apparatus is formed by a lip located outside of an edge of the apparatus between the back and the front and capable of being thrust through an opening in the housing of the current distributing means which is located along the edges of the housings of the apparatus mounted on the carrier.

The lip, according to the case, may be arranged either outside of the bottom edge or outside of the top edge of the apparatus fixed to the carrier by its rear wall.

Furthermore, the apparatus, in particular the current interruptor, may be of the type to which wires may be connected both for current supply and for current output, an opening being arranged per phase both in the top and in the bottom edge of the housing, facing a conventional terminal connection, while at an edge, and more towards the front, an opening is arranged through which a contact element with a lip projects outward, the contact element being preferably fixed to a conductive part inside of the housing of the apparatus.

In the known totality according to EP A 0,886,353, the current interruptors are specially built for the totality, and for example are no longer serviceable when it is desired to effect the electrical distribution by means of cables instead of by means of a current distributing means as described above.

The apparatus may be multipolar, in which there is a lip per pole or phase, and the current distributing means comprise several conductors.

Since the apparatus fixed to a carrier and its lips lie on a line parallel to the lengthwise direction of the carrier, the openings in the housing of the current distributing means are also located on a line, and the various conductors must have contact plates for the contact elements located on a line with respect to the openings.

For this purpose, the conductors have a plurality of projecting tongues, where in the case of at least one conductor, and preferably all conductors, the tongues comprise a bowed termination, one leg of the bowed termination serving as contact surface for a lip.

Preferably, the conductors are provided with spring elements arranged on the legs and forming a contact surface.

The invention also relates to the current distributing means intended for the totality hereinbefore described and the apparatus characterized by the presence of a lip.

The invention will now be described in greater detail, by way of example, with reference to the drawings, in which:-
Fig. 1 shows a front view of a portion of a box for electrical equipment in which the totality according to the invention is arranged;
Fig. 2 shows a section at the line II-II in Fig. 1;
Fig. 3 shows a perspective view of a current distributing means in the totality of Fig. 1, at the time of assembly thereof, and hence with the components thereof drawn out of each other;
Fig. 4 shows a perspective view of the current distributing means of Fig. 3, after assembly, with an assembly plate but without the top of the housing;
Fig. 5, to a larger scale, shows a cross-section at the line V-V in Fig. 4;
Fig. 6 shows a perspective view of the current distributing means of Fig. 3, after complete assembly and with a plurality of current interruptors;
Fig. 7, to a larger scale, shows a cross-section at the line VII-VII in Fig. 6;
Fig. 8 shows a cross-section similar to that of Fig. 7, but pertaining to a different embodiment of the invention.

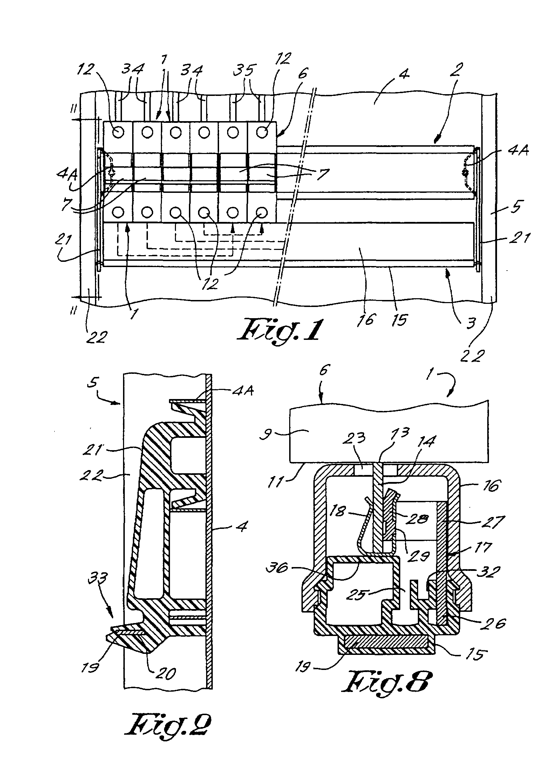

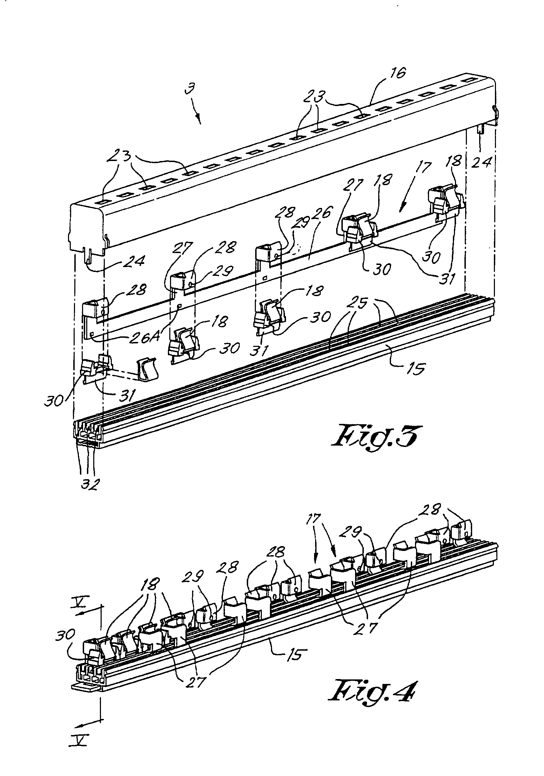

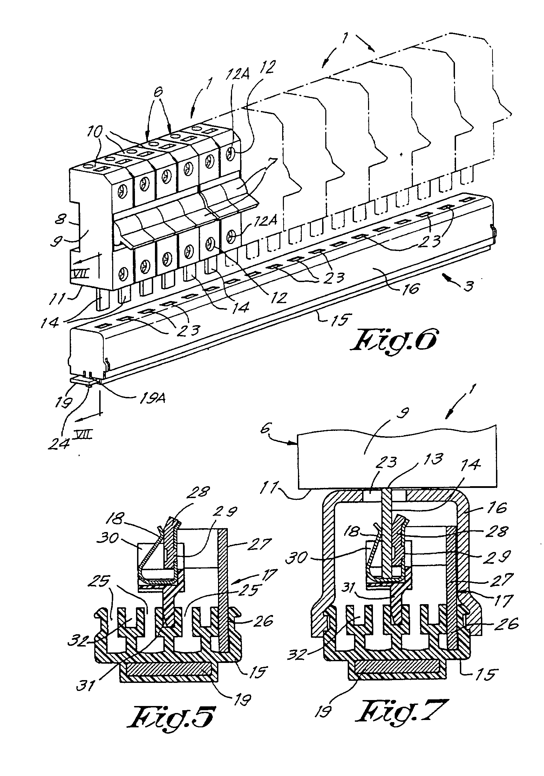

The totality shown in Fig. 3 consists essentially of a plurality of apparatus, namely current interruptors 1, so-called automation carriers mounted on a carrier consisting of a DIN rail 2 and electrically connected to each other by current distributing means 3.

The rail 2 fixed in known manner by way of strips or, as shown, by way of supports 4A to the rear wall 4 of a box 5 the rear wall 4 of which is set up vertically in or against a wall. By the rear side of a current interruptor 1 is meant, in this application, the side directed to the rear wall 4 and the rail 2.

Often several rails 2 with current interruptors 1 are arranged on the rear wall 4, in which case one current distributing means 3 is arranged per rail 2.

In the example shown, the current distributing means 3 distributes current from a four-pole current interruptor 1, to which current is supplied for example from the electrical network, to for example seven two-pole current interruptors 1, of which only one is shown in Fig. 1.

In a multipole current interruptor 1, two or more single-pole current interruptors with their housing 6 are made fast to each other. Their internal mechanisms and their individual operating keys 7 being coupled to each other so that they switch in and out together.

A multipole current interruptor 1 may also have a common housing 6 and also a single operating key 7.

Before clicking onto a rail 2, the housing 6 of the current interruptors 1 is provided with a depression 8 on its rear side, while the operating key 7 projects out of the front of the housing 6.

The side walls 9 of the housing 6, directed transverse to the rail 2, are flat. The edges 10 and 11 located between the side walls 9 above and below the front are provided for each pole with an opening 12 giving an electric wire access to a connecting terminal closable by means of a screw 12A.

Closer to the front in the bottommost edge 11, a gap 13 is also arranged, through which a conductive metal lip 14 protrudes outside the housing 6.

The current distributing means 3, as shown in detail in Figs. 3 to 5, comprises an insulating housing consisting of a base 15 and a top 16 clicked thereunto, per pole or phase (there are four of them in the example shown), a conductor 17, and, for each lip 14, a contact spring 18 attached to one of the conductors 17.

The lip 14 is in electrical connection with the aforesaid connection terminal in the housings 15, 16, and is connected for example by spot welding to a conductive part of the current interruptor 1. This lip 14 forms a contact element projecting outside the housing 15, 16 that, when the current interruptor 1 is fixed to a rail 2, is directed parallel to the rear wall 4 in the vertical direction.

The base 15 has a hollow bottom through which a metal assembly plate 19 projects. This plate 19 serves not only to reinforce the housing 15, 16, but also its two extremities projecting outside the base 15 fit into gaps 20 in spacers 21.

In a modification, the base does not have a hollow bottom and there is no assembly plate. The housing 15, 16 may itself fit the spacers 21.

These spacers 21 are set up along the side walls 22 of the box 5 and secured with respect to the rear wall 4, for example with a part clamped or clicked between parts standing on the rear wall 4 and, in the example shown, belonging to a support 4A for the rail 2. The rail 2 is screwed tight to two such supports 4A.

The spacers serve to keep the distance between the rail 2 and the assembly plate 19 such that, when the current interruptors 1 are fixed to the rail 2, their lips 14 project through oblong holes 23 in the top 16.

The top 16 is clicked by its lengthwise edges over the base 15 and provided at its extremities with lips 24 that project through openings 19A in the ends of the assembly plate 19.

On the side of the bottom of the base 15 directed towards the top 16, four grooves 25 are arranged over the entire length of the base 15 for the four conductors 17.

Each conductor 17 consists of a copper plate 26 clamped in a groove 25 and has a plurality of tongues 27 directed away from the bottom of the base 15, of which the free end is bowed parallel to the bottom, and one leg 28 projects in the lengthwise direction of the plate 26.

The plate 26 is provided with projections 26A that are able to hook under a wider edge of a wall between two neighboring grooves 25.

Along the groove 25 in which the conductor 17 is located the bowed end is larger or smaller, or projecting on one side or the other, so that all the legs 28 of all the conductors 17 lie on a line more or less above the middle of the base 15, while opposed to each opening 23 in the top 16, one such leg 28 is located, and so after complete assembly of the totality, each leg 28 is in conductive contact with one lip 14 of a current interruptor 1.

The conductors 17 are thus different, and their length may be different as well, and smaller than the length of the base 15.

To improve the electrical contact of a leg 28 with a lip 14, a contact spring 18 is thrust on each leg 28 via the edge of the base 15.

Each leg 28 may be provided with a projection 29 that fits into a matching opening in a leg of a contact spring 18 to hold it firmly on the leg 28.

The leg 28 and a leg of a contact spring 18 placed against it are so shaped that they pass out of each other on the side away from the base 15 and form a sort of receptacle to bring the lip 14 between them more conveniently.

To prevent the contact spring 18 from slipping off the leg 28 located at a distance from the base 15 when a lip 14 is brought in between the leg 28 and the contact spring 18, the latter is contained between two legs of a support 30 that, on the opposed side, [has] a wing 31 with a bent extreme edge projecting into a groove 32 formed in the edge of the wall separating two neighboring grooves 25 in the middle of the base 15.

In this way, the support 30 rests on the base 15 and holds the contact spring 18 in place.

The assembly of the current distributing means 3 is accomplished as follows.

First the contact springs 18 are each thrust sidewise between the legs of a support 30, after which the contact springs 18 are thrust from underneath on the legs 28 until their opening clicks over a projection 29, as schematically indicated in Fig. 3. in which for the sake of clarity only one conductor 17 is shown.

Then the conductors 17 are set one by one into the fitting grooves 25. The assembly plate 19 is pushed into the base 15 pneumatically.

The current distributing means 3 is obtained as indicated in Figs. 4 and 5, where for the sake of clarity the contact springs 18 and their support 30 are shown on four legs 28 only.

In the last step, the top 16 is clicked over the base 15, its lips 24 projecting into openings 19A in the assembly plate 19. The appearance of the current distributing means 3 is then as shown in Figs. 6 and 7, the interruptors 1 being shown before their lips 14 are passed through the openings 23 in the housing 15, 16.

The current distributing means 3 is placed in commerce in this condition as a component to be used in a current distribution box as shown in Fig. 1.

In the box 5, two spacers 21 are arranged between parts of two supports 4A, as shown in Fig. 1; the rail 2 for a row of current interruptors 1 is fixed to these supports 4A. The rail 2 covers a portion of the spacers 21, so that the rail 2 holds the spacers 21 in place.

As shown in detail in Fig. 2, each spacer 21, at a distance from a support 4A, comprises a fork-shaped part 33 whose somewhat springy legs are directed away from the rear wall 4. Between these legs, the aforesaid groove 20 is formed.

The current distributing means 3 assembled as hereinbefore described is placed together with the ends of the assembly plate 19 in the gap beween the legs of the fork-shaped parts 33 of two spacers 21, and in that one of the legs of parts 33 forms a sort of counterhook, the aforesaid ends are held fast.

Finally, the current interruptors 1 have their lips 14 directed towards the current distributing means 3 and are thrust onto the rail 2 as shown in Fig. 6, so that the aforesaid lips 14 enter through the openings 23 in the housing 15, 16 and between a leg 28 and a contact spring 18.

In Fig. 7, a lip 14 is shown connected to a conductor 17, the lip 14 being clamped between a leg 28 and a leg of the contact spring 18 mounted thereon, thus being in conductive contact with the conductor 17.

The first current interruptor 1 is a four-pole, and in conventional manner four incoming wires 34 are connected to the four terminals on the upper edge of the current interruptor. The other current interruptors 1 are two-pole, and outgoing wires 35 are fixed to their connection terminals at the top.

The conductors 17 are so shaped that of the four lips 14 projecting outside the bottom edge of the first current interruptor, two each are placed in electrical contact with two outside of the bottom edge of one of the other current interruptors 1, as schematically shown dotted in Fig. 1.

The space at the rear of the rail 2 remains completely open, and the distributing means 3 is located entirely beneath the current interruptors 1.

When current is supplied to the box 5 from underneath, current interruptors 1 are employed that have a lip 14 per pole projecting outside the top edge of the housing 6, so that after assembly on the rail 2 the lips 14 and the current distributing means 3 are located at the top.

The current distributing means 3 need not necessarily be four-phase and thus comprise four conductors 17 cooperating with a four-pole current interruptor 1. The current interruptor may for example be two-pole, as indicated in Fig. 8.

In this embodiment, the base 15 has only two grooves 25. The base 15 may, as shown in Fig. 8, have an elevation 36 supporting the contact springs 18, so that no supports 30 are required.

Instead of current interruptors 1, other electrical apparatus may be mounted on the rail 2, such as a time switch or the like.

For the sake of good order, various aspects of the invention are set out in the following clauses:-
1. Totality comprising a plurality of electrical apparatus (1), in particular current interruptors, a support (2) on which the apparatus (1) may be mounted and a current distributing means for transferring current from one apparatus (1) to one or more other apparatus (1) mounted on the same support (2), the current distributing means comprising a lengthwise electrically insulating housing (15, 16) provided with openings and, for at least one phase, electrical conductors (17) laid in the housing (15, 16), the apparatus (1) comprising a housing (6) and, per phase, an electrical contact element (14) projecting out of its housing (6) and, after placement of the apparatus (1) on the carrier (2) and attachment of the current distributing means (3), penetrates an opening (23) in the housing (15, 16) of the current distributing means (3) and makes conductive contact with the conductor (17) therein, characterized in that the portion of a contact element projecting outside the housing (6) of the apparatus (1) is formed by a lip (14) projecting outside of and between the back and front of the edge (11) of the apparatus (1) and is capable of being thrust through an opening (23) in the housing (15, 16) of the current distributing means (3) that is located along the edges (10, 11) of the housings (6) of the apparatus (1) mounted on the carrier (2).
2. Totality according to clause 1, characterized in that the apparatus (1) in particular a current interruptor, is of the type to which, both for supply of current and for discharge of current, wires (34, 35) can be connected, an opening (12) being arranged both at the top and at the bottom edge (10, 11) of the housing (6) per phase, facing a conventional terminal connection, while on one edge (11), and more towards the front, an opening (13) is arranged through which a contact element having a lip (14) projects to the outside, the contact element being preferably welded to a conductive part of the apparatus (1) inside the housing (6).
3. Totality according to clause 1 or 2, characterized in that the housing (15, 16) of the current distributing means (3) comprises a base (15) and top (16) fastened thereon, while the openings (23) for the lips (14) are arranged in the top (16).
4. Totality according to any of the preceding clauses, characterized in that the apparatus (1) is multipolar, while having a lip (14) per pole or phase, and the current distributing means (3) comprises several conductors (17).
5. Totality according to clause 4, characterized in that the conductors (17) have a plurality of projecting tongues (27), where in the case of at least one conductor (17) and preferably of all conductors, the tongues (27) comprise a bowed extremity, one leg (28) of the bowed extremity being employed as contact surface for a lip (14).
6. Totality according to clause 5, characterized in that the legs (28) of all the conductors (17) are located on a line, while the openings (23) in the housing (15, 16) of the current distributing means (3) are also located on a line.
7. Totality according to clause 5 or 6, characterized in that the conductors (17) are provided with spring elements (18) arranged on the legs (28), forming a contact surface.
8. Totality according to clause 7, characterized in that the spring elements (18) are each contained in a support (30) that rests on a portion of the housing (15, 16) of the current distributing means.
9. Totality according to clauses 3 and 4, characterized in that the conductors (17) have a plate (26) provided with the tongues (27), while the base (15) of the housing (15, 16) of the current distributing means (3) is provided with a groove (25) in which the plate (26) is arranged.
10. Totality according to clauses 8 and 9, characterized in that a support (30) has a wing (31) projecting into a depression (32) formed in the wall of a groove (25) in the base (15).
11. Totality according to any of clauses 3, 9 and 10, characterized in that, through the bottom of the base (15) of the housing (15, 16) of the current distributing means (3), an assembly plate (19) is arranged, the ends of which project outside the base for attachment of the current distributing means (3) at a certain distance from the carrier (2).
12. Totality according to clause 11, characterized in that the assembly plate (19) is fixed by its extremities in spacers (21).
13. Totality according to any of the preceding clauses, characterized in that the apparatus are current interruptors (1).
14. Current distributing means intended for the totality according to any of the preceding clauses, being thus provided with at least one lengthwise electrically insulating housing (15, 16) provided with openings (23) and, for at least one phase, an electrical conductor (17) placed in the housing (15, 16).
15. Apparatus for the totality according to any of clauses 1 to 13, characterized in that, at least on one edge (11), it extends between its rear side intended to be mounted on a carrier (2) and its front, being provided with a gap (13) outside of which a lip (14) projects that is in connection with a conductive part inside the housing (6) of the apparatus.

## Claims

1. Totality comprising a plurality of electrical apparatus (1), in particular current interruptors, a support (2) on which the apparatus (1) may be mounted and a current distributing means for transferring current from one apparatus (1) to one or more other apparatus (1) mounted on the same support (2), the current distributing means comprising a lengthwise electrically insulating housing (15, 16) provided with openings and, for at least one phase, electrical conductors (17) laid in the housing (15, 16), the apparatus (1) comprising a housing (6) and, per phase, an electrical contact element (14) projecting out of its housing (6) and, after placement of the apparatus (1) on the carrier (2) and attachment of the current distributing means (3), penetrates an opening (23) in the housing (15, 16) of the current distributing means (3) and makes conductive contact with the conductor (17) therein, **characterized in that** the portion of a contact element projecting outside the housing (6) of the apparatus (1) is formed by a lip (14) projecting outside of and between the back and front of the edge (11) of the apparatus (1) and is capable of being thrust through an opening (23) in the housing (15, 16) of the current distributing means (3) that is located along the edges (10, 11) of the housings (6) of the apparatus (1) mounted on the carrier (2).

2. Totality according to claim 1, **characterized in that** the apparatus (1) in particular a current interruptor, is of the type to which, both for supply of current and for discharge of current, wires (34, 35) can be connected, an opening (12) being arranged both at the top and at the bottom edge (10, 11) of the housing (6) per phase, facing a conventional terminal connection, while on one edge (11), and more towards the front, an opening (13) is arranged through which a contact element having a lip (14) projects to the outside, the contact element being preferably welded to a conductive part of the apparatus (1) inside the housing (6).

3. Totality according to claim 1 or 2, **characterized in that** the housing (15, 16) of the current distributing means (3) comprises a base (15) and top (16) fastened thereon, while the openings (23) for the lips (14) are arranged in the top (16).

4. Totality according to any of the preceding claims, **characterized in that** the apparatus (1) is multipolar, while having a lip (14) per pole or phase, and the current distributing means (3) comprises several conductors (17).

5. Totality according to claim 4, **characterized in that** the conductors (17) have a plurality of projecting tongues (27), where in the case of at least one conductor (17) and preferably of all conductors, the tongues (27) comprise a bowed extremity, one leg (28) of the bowed extremity being employed as contact surface for a lip (14).

6. Totality according to claim 5, **characterized in that** the legs (28) of all the conductors (17) are located on a line, while the openings (23) in the housing (15, 16) of the current distributing means (3) are also located on a line.

7. Totality according to claim 5 or 6, **characterized in that** the conductors (17) are provided with spring elements (18) arranged on the legs (28), forming a contact surface.

8. Totality according to claim 7, **characterized in that** the spring elements (18) are each contained in a support (30) that rests on a portion of the housing (15, 16) of the current distributing means.

9. Totality according to claims 3 and 4, **characterized in that** the conductors (17) have a plate (26) provided with the tongues (27), while the base (15) of the housing (15, 16) of the current distributing means (3) is provided with a groove (25) in which the plate (26) is arranged.

10. Totality according to claims 8 and 9, **characterized in that** a support (30) has a wing (31) projecting into a depression (32) formed in the wall of a groove (25) in the base (15).
